# EUROPEAN PATENT SPECIFICATION

(11) **EP 2 224 633 B1**
(45) Date of publication and mention of the grant of the patent: **09.11.2011**
(21) Application number: 09153886.8
(22) Date of filing: 27.02.2009
(51) Int. Cl.: H04L 1/00, H04L 1/20, H04L 1/18

(54) **Code block reordering prior to forward error correction decoding based on predicted code block reliability**
Kodeblock-Neusortierung vor der Vorwärtsfehlerkorrektur-Dekodierung basierend auf einer vorhergesagten Kodeblockzuverlässlichkeit
Réorganisation de blocs de code avant le décodage de la correction d'erreurs en aval basé sur la fiabilité de blocs de code prédite

(43) Date of publication of application: 01.09.2010
(73) Proprietor: RESEARCH IN MOTION LIMITED, Waterloo, Ontario N2L 3W8 (CA)
(72) Inventor: Earnshaw, Andrew Mark, Kanata Ontario K2K 3E7 (CA); Duggan, Jason Robert, Kanata Ontario K2K 3E7 (CA); Creasy, Timothy James, Kanata Ontario K2K 3E7 (CA)
(74) Representative: Patel, Binesh

(56) References cited:
- EP-A2- 1 748 592
- WO-A1-2007/078219
- US-A1- 2003 058 820

## Description

### BACKGROUND

The present patent disclosure relates to data transmission, more specifically, the present patent disclosure relates to forward error correction used in data transmission.

The transmission of information data bits may be made through various communication systems. Communication systems are typically designed to maximize performance given system constraints such as power, bandwidth and data rate. Any perturbation between a transmitter and a receiver of a communication system may adversely affect the signal and the information data bits carried in the signal. Hence, the received data bits may be corrupted due to various perturbations during the transmission.

There exist various schemes for providing reliable transportation of data across noisy channels of a communication system. These schemes can be grouped into two categories: error detection schemes and error correction schemes. Error detection is intended to describe the ability to detect the presence of errors caused by noise or other perturbations during transmission from the transmitter to the receiver; error correction is intended to describe the ability to reconstruct the original, error-free data.

Various error detection schemes exist and they are generally quite simple. Examples include: parity scheme, checksum, cyclic redundancy check (CRC), and hash function.

In general, there are two ways to design an error correcting scheme. In a communication system where a feedback is available, automatic repeat request (ARQ) schemes can be implemented. ARQ schemes typically operate with frames of information data, and use acknowledgments and timeouts to achieve reliable data transmission. The frames may include information bits and CRC bits, implemented with a cyclic code. A receiver uses the CRC bits to determine if any bit errors have occurred and, if so, requests a retransmission of the frame by sending a negative acknowledgment (NAK; i.e., an error indication) on the feedback channel. This is repeated until the frame is received without errors, in which case a positive acknowledgment (ACK) is sent. In many cases, the request may be implicit: the receiver sends an ACK of correctly received data, and the transmitter resends anything not acknowledged within a reasonable period of time.

The second error correcting scheme does not send any messages back to the transmitter. With forward error correction (FEC), the transmitter encodes the data with an error-correcting code (ECC) and sends the coded message. The receiver decodes what it receives into the "most likely' data. The codes are designed to increase the immunity of the transmitted signal to noise without increasing signal power, so that it would take an "unreasonable" amount of noise to trick the receiver into misinterpreting the data.

Hybrid ARQ (HARQ) systems combine FEC and ARQ in order to improve ARQ throughput performance. In pure ARQ systems, the probability of a frame being in error is a function of channel bit error rate and frame length. The redundant bits generated by a FEC code are incorporated into the frame-based retransmission approach of ARQ systems. By incorporating FEC, the frame error rate can be reduced significantly. This reduction in frame error rate accordingly reduces the number of retransmissions required and therefore improves throughput performance, but requires more complex transmitter and receiver designs to provide for FEC.

Advanced wireless systems, for example, Third Generation Partnership Project (3GPP) Long Term Evolution (LTE) systems are designed to deliver large amounts of data to the end user. To accomplish this, the amount of user data in a transport block within one radio subframe can be quite large; for example, a downlink radio subframe in 3GPP LTE could contain tens of thousands of bits.

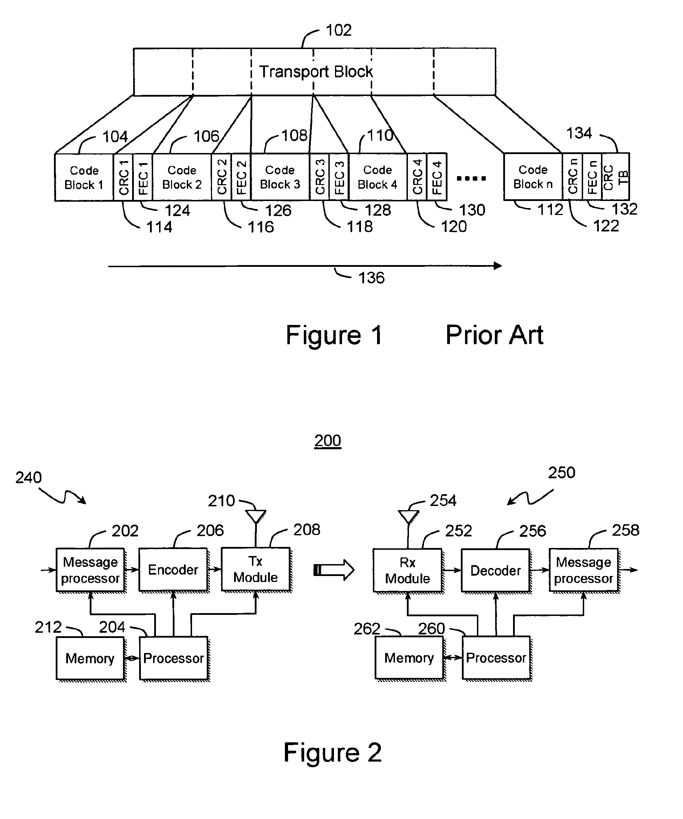

Referring to Figure 1, where a transport block 102 is large, for example, as in a 3GPP LTE system, the transport block is segmented into multiple code blocks 104, 106, 108, 110, 112, which is advantageous because of benefits such as enabling parallel processing or pipelining implementation and flexible trade off between power consumption and hardware complexity. An error detecting code, for example, CRC 114, 116, 118, 120, 122 is typically applied at the transmitter on a code block by code block basis to provide error protection during over-the-air transmission. For error correction, FEC 124, 126, 128, 130, 132 is then applied to each of the code blocks. The entire transport block may also have a CRC 134 which is calculated across all of the information bits of the entire transport block 102.

The prior art approach to decode the code blocks 104, 106, 108, 110, 112 at the receiver is simply to process them in the order they are received, as indicated by arrow 136 in Figure 1. If an individual code block, i.e. 110 fails its CRC 118 check, then the transport block CRC 134 can also be assumed to fail and the decoding of any further code blocks within the same transport block can be terminated immediately in order to avoid unnecessary power consumption. However, several code blocks 104, 106, 108, 112 within the transport block 102 may have already been decoded prior to the first code block CRC failure occurring, and this decoding represents wasted effort and power.

In the event of an HARQ retransmission, additional computational expense may be incurred by not maximizing the expected number of successful code blocks processed during the current retransmission round, since those code blocks would not need to be processed (demapped, decoded, etc.) in the following retransmission. Both of these events represent power consumption, and battery drain, at the handset.
[0011a] WO 2007/078219 A1 relates to automatic repeat request (ARQ) in wireless communication systems wherein a coded message block is spread over a plurality of sub-carriers or components.

There is therefore a need for an improved method and system for decoding code blocks within a transport block.

### SUMMARY

According to an aspect of the patent disclosure there is provided a receiver in a communication system, as recited in Claim 1.

According to another aspect of the patent disclosure there is provided a method of receiving a transport block of data, as recited in Claim 11.

According to another aspect of the patent disclosure there is provided a computer storage medium readable by a computer encoding a computer program for execution by the computer to carry out the above described method, as recited in claim 15.

### BRIEF DESCRIPTION OF THE DRAWINGS

These and other features of the invention will become more apparent from the following description in which reference is made to the appended drawings wherein:
Figure 1 shows a diagram of a transport block comprising a plurality of code blocks;
Figure 2 is a block diagram of a transmitter and a receiver in a communication system;
Figure 3 depicts the steps of a decoding process;
Figures 4 (a) illustrates metrics predicting the reliability of the code blocks;
Figures 4 (b) illustrates an exemplary reordering of code blocks based on the reliability metric;
Figures 4 (c) illustrates another exemplary rearrangement of code blocks based on the reliability metric;
Figure 5 (a) is an exemplary diagram showing functional blocks in a receiver in which the embodiments of the present patent disclosure can be practiced;
Figure 5 (b) is another exemplary diagram showing functional blocks in a receiver in which the embodiments of the present patent disclosure can be practiced;
Figure 6 shows the steps of a decoding process in accordance with one embodiment described in the present patent disclosure;
Figure 7 shows the steps of a decoding process in accordance with another embodiment described in the present patent disclosure; and
Figure 8 shows the steps of a decoding process in accordance with another embodiment described in the present patent disclosure.

### DETAILED DESCRIPTION OF PREFERRED EMBODIMENTS

Reference will now be made in detail to some specific embodiments. Examples of these specific embodiments are illustrated in the accompanying drawings. While the patent disclosure is described in conjunction with these specific embodiments, it will be understood that it is not intended to limit the patent disclosure to the described embodiments. In the following description, numerous specific details are set forth in order to provide a thorough understanding of the present patent disclosure. The present patent disclosure may be practiced without some or all of these specific details. In other instances, well-known process operations have not been described in detail in order not to unnecessarily obscure the present patent disclosure.

The terminology used herein is for the purpose of describing particular embodiments only and is not intended to be limiting of the patent disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or steps plus function elements in the claims below are intended to include any structure, material, or act for performing the function in combination with other claimed elements as specifically claimed. The description of the present patent disclosure has been presented for purposes of illustration and description, but is not intended to be exhaustive or limited to the patent disclosure in the form disclosed. The embodiment was chosen and described in order to best explain the principles of the patent disclosure and the practical application, and to enable others of ordinary skill in the art to understand the patent disclosure for various embodiments with various modifications as are suited to the particular use contemplated.

Those skilled in the art will appreciate that the patent disclosure may be practiced with many computer system configurations, including personal computers, hand-held devices, multiprocessor systems, microprocessor-based or programmable consumer electronics, network PCs, minicomputers, mainframe computers and the like. The patent disclosure may also be practiced in distributed computing environments where tasks are performed by remote processing devices that are linked through a communications network. In a distributed computing environment, program modules may be located in both local and remote memory storage devices.

As used herein, the term "transmission" is intended to describe the process of sending, propagating and receiving an information signal over a physical point-to-point or point-to-multipoint transmission medium, either wired or wireless. Transmission typically involves the use of a digitized signal.

The term "wireless transmission" is intended to describe transmission in which electromagnetic waves carry a signal over part or the entire communication path. Wireless transmission may include, but is not limited to, Code Division Multiple Access (CDMA), Time Division Multiple Access (TDMA), Frequency Division Multiple Access (FDMA), Orthogonal FDMA (OFDMA), Single-Carrier FDMA (SC-FDMA), wireless local area networks (WLANs), broadcast networks. CDMA may include, but is not limited to, cdma2000, Universal Terrestrial Radio Access (UTRA). TDMA may include, but not limited to, technology such as Global System for Mobile Communications (GSM). An OFDMA system utilizes Orthogonal Frequency Division Multiplexing (OFDM) and sends modulation symbols in the frequency domain on orthogonal subcarriers, and may be implemented in technologies such as E-UTRA or E-UTRAN.

The term "radio subframe" or "wireless subframe" is intended to describe the basic time interval used for data transmission on the radio physical channel in wireless transmission. In 3GPP LTE, for example, a radio subframe is a numbered time interval of 1 ms duration.

The term "transport block" is intended to describe a unit of data that is mapped to a radio subframe. The size of the transport block may be determined by the governing radio interface protocol, it is therefore possible for a radio subframe to include one or more transport blocks. The transport block may have a fixed or variable size.

The term "code block" is intended to describe a sub-unit of a transport block. A code block is generally encoded individually using an error detection and/or error correcting encoding scheme. The encoding generates both error detection and error correction capability for the information to be transmitted. The number of code blocks within a transport block may vary, depending on the underlying protocol. For example, an LTE downlink transport block to be decoded at the handset would contain a maximum of 9 code blocks for a Category 2 User Equipment (UE) and a maximum of 50 code blocks for a Category 5 UE.

The term "downlink communication" is intended to describe transmission from a base station to a mobile station in a wireless communication system, and the term "uplink communication" is intended to describe transmission from a mobile station to a base station. The wireless communication system may generally include multiple base stations and multiple mobile stations, while a single base station often communicates with a set of mobile stations. Base stations and mobile stations may employ multiple antennas for transmitting and receiving radio wave signals. A mobile station may include, but not limited to, a PDA, laptop, or handheld device.

The term "forward error correction (FEC)" is intended to describe a method for error control in data transmission whereby the sender adds redundancy to the original information data bits using a predetermined algorithm, allowing the receiver to detect and correct errors. The original information data bits may or may not appear in the encoded output; codes that include the original information data bits in the output are systematic, while those that do not are non-systematic.

FEC can be categorized into block coding and convolutional coding. Using block coding, the encoder intersperses parity bits into the data sequence using a particular algebraic algorithm, and the decoder applies an inverse of the algebraic algorithm to identify and correct any errors caused by channel corruption. Block coding uses fixed-size blocks of bits of predetermined size. Examples of block code include Reed-Solomon coding, Golay, Bose-Chaudhuri-Hochquenghem (BCH) and Hamming coding.

Convolutional coding processes the incoming bits in streams rather than in blocks. The convolutional encoding of a bit is strongly influenced by the bits that preceded it. A convolutional decoder takes into account past bits when trying to estimate the most likely sequence of data that produced the received sequence of code bits.

One example of a convolutional decoder is the Viterbi algorithm. At each bit-interval, the Viterbi decoding algorithm compares the actual received coded bits with the coded bits that might have been generated for each possible memory-state transition. It chooses, based on metrics of similarity, the most likely sequence within a specific time frame.

Another example code that uses convolutional encoders is turbo coding, a scheme that combines two or more relatively simple convolutional codes and an interleaver to produce a block code that can approach the theoretical limit of channel capacity, as characterized by the so-called Shannon Limit. Turbo coding is used in CDMA2000 1x (TIA IS-2000), 1xEV-DO (TIA IS-856), as well as 3GPP LTE.

The term "automatic repeat request (ARQ)" is intended to describe an error correction scheme when a feedback channel is available. ARQ schemes typically operate with frames of information data. The frames include information bits and error-detecting bits, for example, CRC bits implemented with a cyclic code. A receiver uses the CRC bits to determine if any bit errors have occurred and, if so, requests a retransmission of the frame by sending a negative acknowledgment (NAK; i.e., an error indication) on the feedback channel. This is repeated until the frame is received without errors, in which case a positive acknowledgment (ACK) may be sent. The bit error rate (BER) of ARQ schemes is determined by the undetected error rate of the error detecting code and is usually selected to be very low.

The term "hybrid ARQ (HARQ)" is intended to describe a combination of FEC and ARQ in order to improve ARQ performance in communication systems with unreliable and time-varying channel conditions. Early versions of HARQ, Type-I HARQ, add both error detection, for example, CRC, and FEC information to each message prior to transmission. The receiver then uses the decoding algorithm corresponding to the FEC scheme to decode the error-correction code. The CRC is then computed to determine if the received data contains errors, if the channel quality is insufficient, and not all transmission errors can be corrected, the receiver will detect this situation using the error-detection code, and retransmission may be requested. Any retransmitted bits may be combined with the previously-received bits in order to improve the probability of a successful decoding. Conversely, if the channel quality is good enough, all transmission errors should be correctable, and the receiver can obtain the correct data block. The throughput of the Type-I HARQ is limited to a maximum value equal to the rate of the FEC code used.

In a more sophisticated form, Type-II HARQ adaptively varies the amount of additional error correcting bits sent to the receiver. Type-II HARQ initially transmits only information bits and CRC bits (although some error correcting bits may also be included). Subsequent retransmission requests entail incremental transmission of error correcting bits and/or the original systematic information bits. As for Type-I HARQ, each error correcting increment may optionally be combined with the previously received symbols by a decoder in the receiver. After each retransmission, the receiver is decoding a more powerful, lower rate code. Type-II HARQ systems have the ability to vary their throughput dynamically as channel conditions change.

Referring to Figure 2, a block diagram of a transmitter 240 and a receiver 250 in a communication system 200, for example, a wireless communication system, is shown. For a downlink communication in a wireless system, transmitter 240 may be part of a base station, and receiver 250 may be part of a terminal.

At transmitter 240, a message processor 202 receives information from a data source (not shown) and/or a processor 204 and generates a transport block for the received information. The transport block may have a fixed or variable size. An encoder 206 receives the transport block from processor 202, divides the transport block into code blocks and encodes the code blocks based on an error detection and/or error correcting encoding scheme. The encoding generates both error detection and error correction capability for the information to be transmitted.

A transmitting module 208 processes the encoded code block from encoder 206 and generates a modulated signal. The modulated signal is transmitted via an antenna 210.

At receiver 250, an antenna 254 receives the transmitted signal from transmitter 240 and provides a received signal to a receiving module 252. Receiving module 252 processes the received signal in a manner complementary to the processing performed by transmitting module 208 and provides received code blocks. A decoder 256 decodes each received code block and provides a corresponding decoded message to a message processor 258. Decoder 256 performs decoding in a manner complementary to the encoding performed by encoder 206 at transmitter 240. For example, decoder 256 may perform block decoding for a block code, Viterbi decoding for a convolutional code, Turbo decoding for a Turbo code, etc. Message processor 258 recovers information from each decoded message, performs an error detecting algorithm and provides the information to a data sink (not shown) and/or a processor 260.

Processors 204 and 260 control the operation at transmitter 240 and receiver 250, respectively. Memories 212 and 262 store data and program codes for transmitter 240 and receiver 250, respectively.

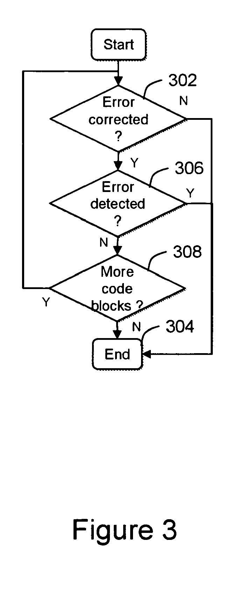

Referring to Figures 1 to 3, when a transport block 102 is received, the individual code blocks 104, 106, 108, 110, and 112 are first decoded by the decoder 256, the code blocks generally are decoded in the order in which they are received at the receiving receiver 250, as indicated by the arrow 136 in Figure 1. The use of error correction significantly increases the probability of being able to successfully decode the original information at the receiver 302, however, if the error cannot be corrected for any code block 104, 106, 108, 110, 112 and the respective error detection bits 114, 116, 118, 120 and 122, the decoding process will end 304. If the code blocks 104, 106, 108, 110, 112 including error detection bits 114, 116, 118, 120 and 122 are correctly decoded, i.e. any detected error corrected, the received code blocks 104, 106, 108, 110, 112 are successively verified using error detection code, for example, CRC, to ensure that the data has been correctly received 306. Error detection codes such as CRC generally are a function of the original information bit values, for example, code blocks 104, 106, 108, 110, 112. Error detection codes are usually computed at the transmitter 240 and included within the code block data prior to encoding. At the receiver 250, the decoded bits are used to recalculate the CRC. If the receiver CRC matches the value that was sent by the transmitter, then the data is assumed to have been received correctly. In addition to each code block 104, 106, 108, 110, 112 having its own individual CRC 114, 116, 118, 120, 122, the entire transport block 102 also has a CRC 134 which is calculated across all of the information bits of the entire transport block. This second-level transport block CRC provides an additional layer of integrity protection and verification.

Continuing with using CRC as an example, if an individual code block 110 fails its CRC 120 check 306, then the transport block CRC 134 can also be assumed to fail and the decoding of any further code blocks within the same transport block can be terminated 304 immediately. However, several code blocks 104, 106, 108 within the transport block 102 have already been decoded prior to the first code block CRC 110 failure occurring, and this decoding may represent wasted effort.

For handset manufacturers, one of the prime design considerations is to maximize battery life by minimizing power consumption wherever possible. The error correction decoder typically represents a significant amount of power consumption at the receiver due to the number of computations that must be performed. It is therefore desirable to minimize the number of decoding attempts that are made on code blocks within a given transport block. For example, if a code block decoding fails on the first transmission attempt, a retransmission would be requested. A second decoding attempt would then need to be made on the retransmitted received data, and this would represent additional power consumption.

Advanced wireless systems such as 3GPP LTE are designed to deliver large amounts of data to the end user. The transport block can be quite large, and in some systems such as in LTE, the entire transport block needs to be retransmitted, as retransmissions of the failed code blocks only cannot be requested. For example, a typical HARQ operating point in a real-life system would commonly have an expected raw error rate of 10-15%. That is, 10-15% of the transport blocks would fail to be decoded properly in their first transmission attempt. Consequently, the number of transport block and/or code block CRC failures would be expected to be significant, resulting in considerable wasted effort and power.

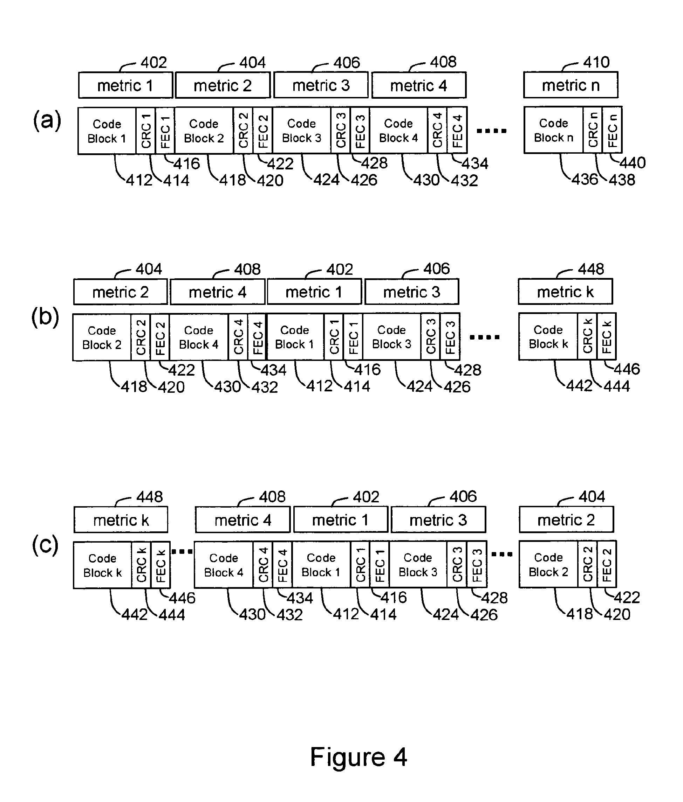

Referring to Figure 4 (a), in accordance with one embodiment of the present patent disclosure, a reliability metric 402, 404, 406, 408, 410 predicting the reliability of the code block is provided for each of the code blocks 412, 418, 424, 430 and 436. The reliability metrics may be considered as an indication of the probability that the received data prior to decoding will be successfully decoded. Based on the metrics, as indicated in Figure 4 (b) and (c), the code blocks 412, 418, 424, 430 and 442 are re-arranged before the decoding.

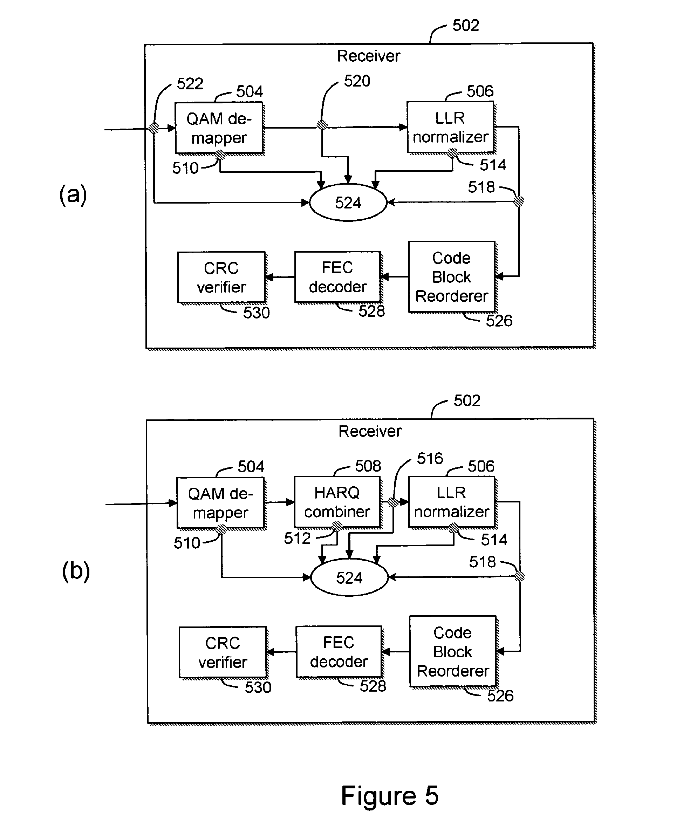

Figure 5 (a) is a diagram showing the functional blocks in a receiver 502 implementing one embodiment of the present patent disclosure. It should be apparent to a person skilled in the art that the functional blocks may be implemented in one or more of the receiving module 252, decoder 256, message processor 258, and/or processor 260 in the receiver 250 as described in Figure 2.

Quadrature amplitude modulation (QAM) is often used in next generation wireless communication systems to increase spectral efficiency by increasing the number of coded bits carried per modulation symbol. In Figure 5 (a), the received signal is first processed at a demapping element, or demapper , for example, a QAM demapper 504. In the QAM demapper 504, the received signal is demodulated into I real and Q imaginary data (which was originally mapped using a constellation having M bits for each I and Q data), demapped, and deinterleaved. The QAM demapper 504 estimates an amplitude of a signal constellation of a QAM signal. The signal may include a pilot channel and a supplemental channel. The QAM demapper 504 may estimate the amplitude based upon a power of a signal combination of a traffic symbol and a pilot symbol. A signal and noise estimator inside the QAM demapper 504 may estimate signal and noise characteristics and/or the wireless channel response based on the demapped symbols. The QAM demapper 504 may also include MIMO decoding in the event of a multi-antenna system. The modulation demapper is described here using a QAM demapper 504, however, it should be apparent to a person skilled in the art that other demappers may be used implementing other modulation schemes, for example but not limited to, PSK, ASK, GMSK, FSK.

Different approaches may be used to estimate SNR (Signal to Noise Ratio) values at the receiver. One exemplary approach may involve using the known reference symbols, for example, pilots that were included within the transmitted signal. The average power of these reference symbols may be used to obtain an estimate of the signal power, and the average variance of the reference symbols from their known expected values may be used to provide an estimate of the noise power. It should be recognized that many other methods may also be used to obtain SNR estimates at the receiver.

A log-likelihood-ratio (LLR) normalizer 506 computes and normalizes LLRs for code bits based on the received symbols and the signal, noise and/or channel estimates. In the LLR normalizer 506, both the mean received data symbol energy, and the noise variance of the demapped symbols are used to compute the LLR. The LLR values are further scaled to ensure they lie within the valid range of input values expected by the FEC decoder.

A reliability metric for predicting the relative probability of successfully decoding a code block may also be computed from the LLR values. For example, if the LLRs for a given code block exhibited a low variance, i.e. all of the LLRs were of approximately the same reliability, then the corresponding code block may be considered to be more reliable than a code block whose LLR values exhibited a high variance. Another exemplary approach may involve calculating the ratio of the number of more reliable LLR values, for example, but not limited to LLR values whose magnitudes lie above a certain threshold, to the number of less reliable LLR values, for example, but not limited to LLR values whose magnitudes fall below a certain threshold within a code block in order to predict the relative reliability of successfully decoding a code block. It should be noted that these are only examples of possible methods that could be used to estimate a reliability metric, and the present patent disclosure is by no means limited to use only these possible approaches.

If the data integrity cannot be verified at the receiver when one or more of the CRC checks fail, it may be possible to request a retransmission from the transmitter through ARQ, or HARQ. For HARQ, both Type I and Type II, this second set of received data may then be combined with the previously received data in order to improve the probability of successfully decoding the FEC-protected data. Depending upon the system design and configuration, multiple retransmission rounds may also be possible.

Referring to Figure 5 (b), a HARQ combiner 508 is provided to combine incremental transmissions of error correcting bits from subsequent retransmissions with the previously received symbols in the receiver 502.

There are numerous locations in the receiver 502, where the information for the reliability metrics 402, 404, 406, 408, 410 may be provided. The reliability metric may be derived from the Signal-to-Noise-Ratio (SNR) of the QAM demapped values 520, from the LLR statistics (e.g. mean and/or variance) 518. The selected input data for the reliability metric calculation is collected by a first circuit 524 , for example, a processor to calculate the reliability metric. It should be apparent to a person skilled in the art that it is possible to combine the reliability metric computation with an existing receiver processing component as described in the above to minimize the incremental power cost. This is illustrated in Figure 5(a), for example, where the code block reliability metrics may be generated at the first circuit 524 using the raw output data 520 from the QAM demapper 504 or processed values 510 provided directly by the QAM demapper 504. Similarly, the reliability metrics may also be generated at the first circuit 524 using the raw LLR values 518 or processed values 514 provided by the LLR normalizer 506. A further similar relationship exists in Figure 5(b) between the raw output data 516 and summary values 512 provided by the HARQ combiner 508.

It should be apparent to a person skilled in the art that depending on the receiver design, the order of the HARQ combining and LLR normalization operations may be reversed. Further, the reliability metric calculation could conceivably be combined with one of the existing operations where the numeric values are already being processed, to minimize the incremental cost of computing the reliability metric. In the event of using some function of the Exponential Effective SNR Mapping (EESM), as set forth below, possibly based on the pilots or the channel estimation results, the predicted reliability metric may even be computed prior to the QAM demapping operation. This may facilitate the reordering of the code block processing in an advantageous fashion if a pipelined implementation design is used by providing a more complete list of code blocks for reordering.

In Figure 5 (a) and (b), QAM is used as an exemplary modulation scheme. It should be apparent to a person skilled in the art that other schemes, such as amplitude-shift keying (ASK), phase-shift keying (PSK), and frequency-shift keying (FSK) may also be used. If such a different modulation scheme is used, the associated modulation demapper would also vary from the QAM demapper referred to here. Similarly, multiplexing schemes such as coding division multiplexing (CDM), frequency division multiplexing (FDM), orthogonal frequency division multiplexing (OFDM) may also be used.

Reliability metrics may be derived from, but not limited to, other parameters such as power control bit of any suitable CDMA protocol, bit error rate indicator, frame error rate indicator, packet error rate indicator, other suitable quality indicator, or any combination of the preceding.

For example, a reliability metric may be derived from an effective SNR measure based on the OFDM subcarrier or pilot SNR values in OFDM-based systems, such as the EESM. EESM is described in Ericsson's, "System-level evaluation of OFDM - further considerations," 3GPP TSG-RAN WG1 #35, R1-031303, Nov. 17-21, 2003, available at http://www.3gpp.org/ftp/tsg_ran/WG1_RL1/TSGR1_35/Docs/Zips/R1-031303.zip.

The EESM technique was originally derived to assist with modelling link-layer performance in a system-level OFDM simulator. In an OFDM system, the SNR of each OFDM subcarrier is different, depending upon the current transmission channel and multi-path conditions. The EESM technique allows all of the SNR values for the subcarriers of a given code block to be combined and mapped into a single scalar value; that is, a single effective SNR value that may then be used to obtain an expected BLER (BLock Error Rate) from a BLER curve for an AWGN (Additive White Gaussian Noise) transmission channel. An EESM value may also be used directly as a relative decoding-reliability metric since larger EESM values would correspond to lower expected block error rates, and thus a higher probability of successfully decoding a given code block. Consequently, for an OFDM system or other such wireless system where the received SNRs of different modulation symbols within a given code block may vary, an EESM measure may be used as a possible code block reliability metric.

Another measure that is applicable to a mixed modulation scenario is one based on a mutual information measure. Here there are separate modulation and coding models. The modulation model maps the SINR of each of the individual subcarriers to a symbol-by-symbol mutual information based on the modulation order. The coding model then maps the sum or average of the mutual information values across the code block to a decoding reliability measure.

As each of the individual code blocks including the error detecting code, for example, CRC, is processed independently at the receiver, the reliability metric is used by the code block reorderer 526 to reorder the individual code blocks of the transport block 102, before the decoding by an error correction decoder, for example, a FEC decoder 528. The reordering or sorting of the code blocks is based on predetermined criteria or sorting preference, to provide the desired advantages, for example but not limited to, power savings. The predetermined criteria or sorting preference may include, but not limited to: whether retransmissions are enabled, the present point in the retransmission cycle, etc.

In case that no further retransmissions are possible, for example, ARQ/HARQ is disabled, or the maximum allowed number of transmission attempts has already been reached, it may be desirable to detect a code block error, for example a CRC failure, and subsequent transport block CRC failure, using the minimum expected number of code block decoding attempts. It would therefore be desirable to order the code blocks from least reliable to most reliable based on the reliability metrics, so that decoding attempts are made on the least reliable code blocks first. If any of the code block CRC tests fail, then the transport block CRC will also fail. The least reliable code blocks are most likely to fail their CRC verifications, thus enabling further processing, for example, FEC decoding, of the remaining code blocks of the transport block to be terminated as quickly as possible to reduce overall power consumption. Referring to Figure 4 (b), the reliability metric 2 404 indicates a lower reliability than reliability metric 4 408 which in turn has a lower reliability than reliability metric 1 402, and so on. The highest reliability is indicated by reliability metric k 448. The selection criterion is therefore the lowest reliability metric first.

In other situations where retransmissions are possible, a certain amount of receiver processing has already been performed on each of the code blocks prior to the FEC decoding, for example, QAM demapping, LLR generation. For any code blocks that are successfully decoded in the current transmission, the receiver processing would not need to be repeated in the event of a retransmission and this would result in power savings. Typically, the entire transport block is retransmitted in the event of code block decoding failure resulting in a transport block decoding failure. However, the more code blocks of the transport block that have already been successfully decoded at the receiver, the less the remaining code blocks of the transport block will need to be processed after the retransmission of that transport block, including receiver processing prior to FEC decoding, which would represent duplicate effort and thus wasted power. In this situation, as illustrated in Figure 4 (c) the code blocks are sorted from most reliable 442 to least reliable 418 to maximize the expected number of code blocks that would be decoded successfully before a code block CRC failure is encountered. The selection criterion is therefore the highest reliability metric first. This would in turn reduce the number of code block units that would need to be processed at the receiver following the next retransmission attempt, and reduce the overall power consumption. Further, if any of the individual code block CRC checks at the receiver fails, then the corresponding transport block CRC verification can also be assumed to fail, without necessarily having to actually calculate the transport block CRC at the receiver.

It should be apparent to a person skilled in the art that the above two scenarios are examples only, and that other possible code block orderings using other selection criteria may be possible depending upon the circumstantial conditions of a specific scenario.

Further, the comparisons of predicted code block reliabilities may be performed through relative comparison, requiring no calibration of the overall process to determine any absolute decision threshold values. However, depending upon the specific reliability metric being used and the manner in which it is calculated, some derivation of suitable parameter values may be provided.

In a practical receiver implementation, processing often occurs in a pipelined fashion. That is, not all of the code blocks may be simultaneously available immediately prior to FEC decoding. For instance, the LLRs of the first code block may be available while the second code block is still undergoing QAM demapping. Depending upon various aspects such as resource constraints, the amount of memory that is available, and the delay budget allocations for receiver processing, it may be necessary to begin FEC decoding before reliability metrics for all of the code blocks within a given transport block can be computed.

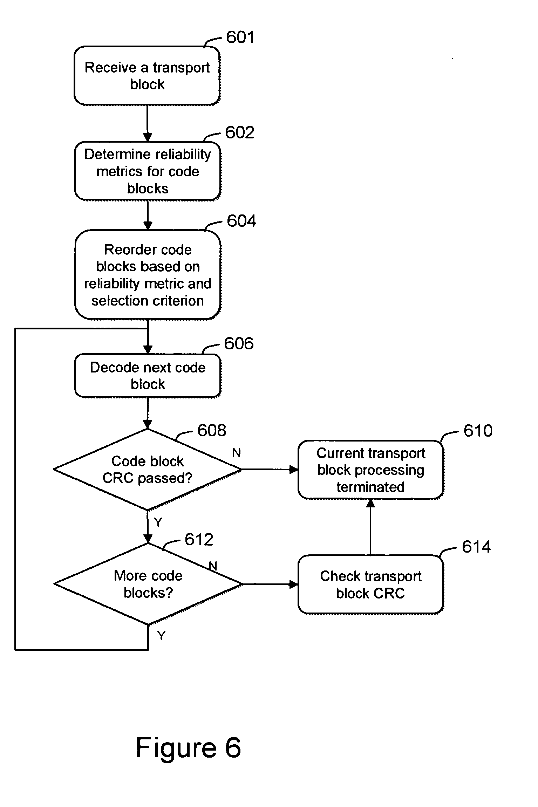

Referring to Figure 6, a method in accordance with an embodiment of the present patent disclosure is described, using CRC as an example for error detection and FEC as an example for error correction.

After a transport block is received 601, reliability metrics are calculated for the code blocks of a transport block 602, using information for example, but not limited to, from the QAM demapper, LLR normalizer or HARQ combiner. The code blocks are then reordered 604 based on reliability metrics and selection criteria. The next code block is decoded 606, and if the code block passes the CRC check 608, then the process moves on to the next code block. Processing of the transport block is terminated 610 when a code block fails the CRC test 608 or all code blocks of the transport block are decoded, and the overall transport block CRC is verified 614 .

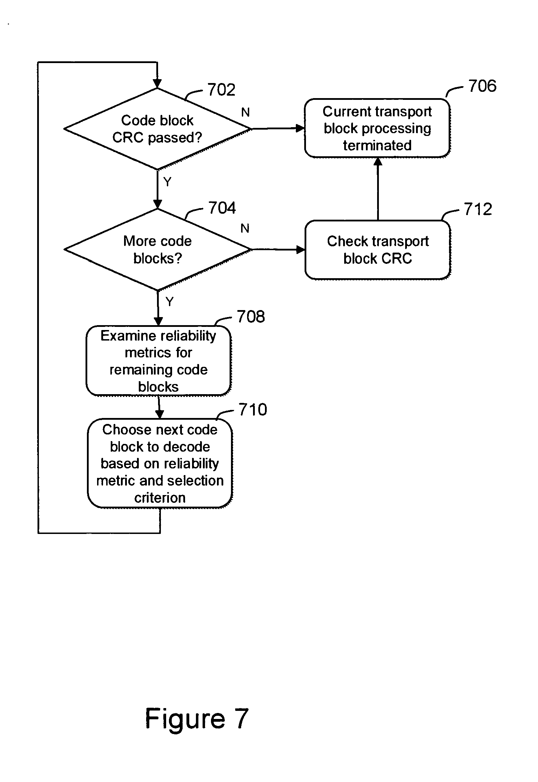

Referring to Figure 7, in accordance with another embodiment of the present patent disclosure, a subset of the code blocks within a transport block may be reordered. Similar to the steps described in the above, processing of the transport block is terminated 706 when a code block fails the CRC test 702 or all code blocks of the transport block are decoded 704, and the overall transport block CRC is verified 712. Otherwise, when FEC decoding of a new code block is about to commence, the list of code blocks that are currently available for immediate decoding is examined 708 and the next code block for decoding is chosen based on the current desired selection criterion 710, for example, based on least reliable code block out of those currently available, or based on most reliable code block out of those currently available.

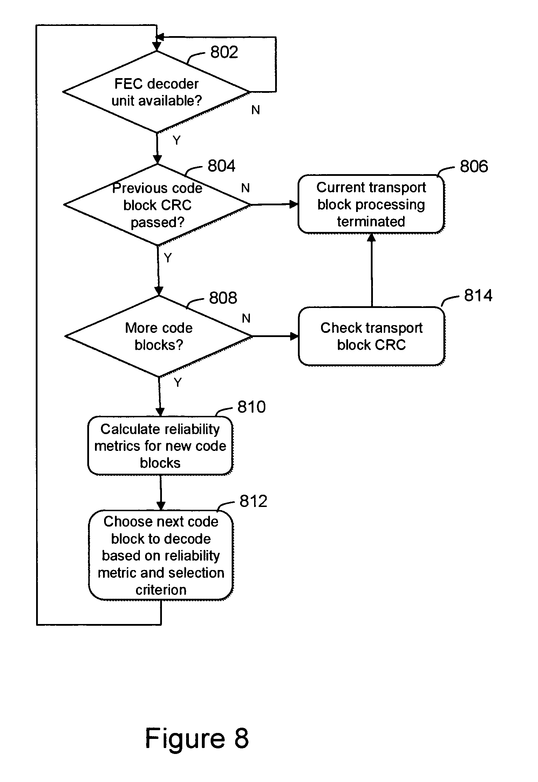

Referring to Figure 8, in accordance with another embodiment of the present patent disclosure, a receiver may also include multiple parallel decoding units to process multiple code blocks in parallel. When an FEC decoder unit becomes available 802, the CRC of the code block that was just decoded by that FEC decoder is checked 804. If this CRC fails, then further processing of the transport block would result in waste of power, and execution should therefore terminate 806. If all code blocks have been processed, then the overall transport block CRC is verified 814, and the execution should also terminate 806. If further code blocks remain to be decoded 808, the reliability metrics of any new code blocks are calculated 810. In case of a pipelined processing, code blocks may also be added to the currently pending list. The next code block to be decoded is chosen based on the current selection criterion 812.

Embodiments within the scope of the present invention can be implemented in digital electronic circuitry, or in computer hardware, firmware, software, or in combinations thereof. Apparatus within the scope of the present invention can be implemented in a computer program product tangibly embodied in a machine-readable storage device for execution by a programmable processor; and method actions within the scope of the present invention can be performed by a programmable processor executing a program of instructions to perform functions of the invention by operating on input data and generating output. Embodiments within the scope of the present invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present invention include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits). While particular embodiments of the present invention have been shown and described, changes and modifications may be made to such embodiments without departing from the true scope of the invention.

## Claims

1. A receiver (250) for a communication system (200), the receiver (250) comprising:
a receiving module (252) receiving a transport block (102), the transport block comprising a plurality of code blocks (104), each of the plurality of code blocks including an error detection code (114) and an error correction code (124), the plurality of code blocks having an ordered sequence;
a first circuit (524) determining a plurality of reliability metrics (404) using an input generated during processing of the code blocks, each of the plurality of reliability metrics (404) corresponding to each of the plurality of code blocks (412);
a code block reorderer (526) reordering the plurality of code blocks (412) in an order based on the plurality of reliability metrics (404) and a selection criterion thereof;
a decoder (528) decoding the plurality of code blocks (412) using the error correction code (422) in the reordered sequence; and
a verifier (530) verifying each of the decoded code blocks (412) using the error detection code (422).

2. The receiver (250) as claimed in claim 1, wherein decoding of remaining code blocks at the decoder is terminated when an error is detected in a decoded code block.

3. The receiver (250) as claimed in any one of claims 1 and 2, wherein the error correction code (422) is a forward error correction code.

4. The receiver (250) as claimed in any one of claims 1 to 3, wherein the error detection code (422) is selected from the group consisting of parity scheme, checksum, cyclic redundancy check, hash function, and a combination thereof.

5. The receiver (250) as claimed in any one of claims 1 to 4, wherein the input for generation of the plurality of reliability metrics is from a modulation demapper (504), a log-likelihood-ratio normalizer (506) or a hybrid automatic repeat request combiner (508).

6. The receiver (250) as claimed in any one of claims 1 to 5, wherein the communication system (200) is a wireless transmission system, and the transport block (102) is received in a wireless subframe through a wireless transmission.

7. The receiver (250) as claimed in any one of claims 1 to 6, wherein the error correction code is a block code or a convolutional code.

8. The receiver (250) as claimed in any one of claims 1 to 7, wherein the error correction code is selected from a group consisting of Reed-Solomon code, Golay code, Bose-Chaudhuri-Hochquenghem code, Hamming code, convolutional code, low-density parity check code and turbo code.

9. The receiver (250) as claimed in any one of claims 1 to 8, wherein the code block reorderer (526) reorders a subset of the code blocks.

10. The receiver (250) as claimed in any one of claims 1 to 9, further comprising multiple parallel decoding units to process multiple code blocks in parallel.

11. A method of receiving a transport block (102) of data, comprising:
receiving (601) a transport block (102), the transport block comprising a plurality of code blocks (104), each of the plurality of code blocks including an error detection code (114) and an error correction code (124), the plurality of code blocks having an ordered sequence;
determining (602) a plurality of reliability metrics (404) using an input generated during processing of the code blocks, each of the plurality of reliability metrics (404) corresponding to each of the plurality of code blocks (412);
reordering (604) the plurality of code blocks (412) in an order based on the plurality of reliability metrics (404) and a selection criterion thereof;
decoding (606) the plurality of code blocks (412) using the error correction code (422) in the reordered sequence; and
verifying (608) each of the decoded code blocks using the error detection code (422).

12. The method as claimed in claim 11, further comprising:
terminating (610) decoding of remaining code blocks of the transport block when an error is detected in a decoded code block.

13. The method as claimed in any one of claims 11 to 12, wherein the error correction code is a forward error correction code.

14. The method as claimed in any one of claims 11 to 13, wherein the error detection code is selected from the group consisting of parity scheme, checksum, cyclic redundancy check, hash function, and a combination thereof.

15. A computer storage medium readable by a computer encoding a computer program for execution by the computer to carry out a method of receiving a transport block of data, the method comprising:
receiving (601) a transport block (102), the transport block comprising a plurality of code blocks (104), each of the plurality of code blocks including an error detection code (114) and an error correction code (124), the plurality of code blocks having an ordered sequence;
determining (602) a plurality of reliability metrics (404) using an input generated during processing of the code blocks, each of the plurality of reliability metrics (404) corresponding to each of the plurality of code blocks (412);
reordering (604) the plurality of code blocks (412) in an order based on the plurality of reliability metrics (404) and a selection criterion thereof;
decoding (606) the plurality of code blocks (412) using the error correction code (422) in the reordered sequence; and
verifying (608) each of the decoded code blocks using the error detection code (422).

## Patentansprüche

1. Empfänger (250) für ein Kommunikationssystem (200), wobei der Empfänger (250) aufweist:
ein Empfangsmodul (252) zum Empfangen eines Transport-Blocks (102), wobei der Transport-Block eine Vielzahl von Code-Blöcken (104) aufweist, wobei jeder der Vielzahl von Code-Blöcken einen Fehlererfassungs-Code (114) und einen Fehlerkorrektur-Code (124) umfasst, wobei die Vielzahl von Code-Blöcken eine geordnete Reihenfolge haben;
eine erste Schaltung (524) zum Bestimmen einer Vielzahl von Zuverlässigkeits-Metriken (404) unter Verwendung einer Eingabe, die erzeugt wird während einer Verarbeitung der Code-Blöcke, wobei jede der Vielzahl von Zuverlässigkeits-Metriken (404) jedem der Vielzahl von Code-Blöcken (412) entspricht;
einen Code-Block-Neuordner (526) zum Neuordnen der Vielzahl von Code-Blöcken (412) in einer Reihenfolge basierend auf der Vielzahl von Zuverlässigkeits-Metriken (404) und einem Auswahlkriterium davon;
einen Decodierer (528) zum Decodieren der Vielzahl von Code-Blöcken (412) unter Verwendung des Fehlerkorrektur-Codes (422) in der neugeordneten Reihenfolge; und
einen Verifizierer (530) zum Verifizieren jedes der decodierten Code-Blöcke (412) unter Verwendung des Fehlererfassungs-Codes (422).

2. Empfänger (250) gemäß Anspruch 1, wobei ein Decodieren von verbleibenden Code-Blöcken an dem Decodierer beendet wird, wenn ein Fehler in einem decodierten Code-Block erfasst wird.

3. Empfänger (250) gemäß einem der Ansprüche 1 und 2, wobei der Fehlerkorrektur-Code (422) ein Vorwärts-Fehlerkorrektur-Code ist.

4. Empfänger (250) gemäß einem der Ansprüche 1 bis 3, wobei der Fehlererfassungs-Code (422) aus der Gruppe ausgewählt ist, die besteht aus Paritäts-Schema, Prüfsumme, CRC(cyclic redundancy check)-Prüfung, Hash-Funktion und eine Kombination daraus.

5. Empfänger (250) gemäß einem der Ansprüche 1 bis 4, wobei die Eingabe zum Erzeugen der Vielzahl von Zuverlässigkeits-Metriken aus einem Modulations-Demapper (504), einem Log-Likelihood-Verhältnis-Normalisierer (506) oder einem HARQ(hybrid automatic repeat request)-Kombinierer (508) ist.

6. Empfänger (250) gemäß einem der Ansprüche 1 bis 5, wobei das Kommunikationssystem (200) ein drahtloses Übertragungssystem ist, und der Transport-Block (102) in einem drahtlosen Teilrahmen über eine drahtlose Übertragung empfangen wird.

7. Empfänger (250) gemäß einem der Ansprüche 1 bis 6, wobei der Fehlerkorrektur-Code ein Block-Code oder ein Faltungscode ist.

8. Empfänger (250) gemäß einem der Ansprüche 1 bis 7, wobei der Fehlerkorrektur-Code aus einer Gruppe ausgewählt ist, die besteht aus Reed-Solomon-Code, Golay-Code, Bose-Chaudhuri-Hochquenghem-Code, Hamming-Code, Faltungscode, Low-Density-Parity-Check-Code und TurboCode.

9. Empfänger (250) gemäß einem der Ansprüche 1 bis 8, wobei der Code-Block-Neuordner (526) einen Teilsatz der Code-Blöcke neuordnet.

10. Empfänger (250) gemäß einem der Ansprüche 1 bis 9, der weiter aufweist mehrere parallele Decodierungseinheiten, um mehrere Code-Blöcke parallel zu verarbeiten.

11. Verfahren zum Empfangen eines Transport-Blocks (102) von Daten, das aufweist:
Empfangen (601) eines Transport-Blocks (102), wobei der Transport-Block eine Vielzahl von Code-Blöcken (104) aufweist, wobei jeder der Vielzahl von Code-Blöcken einen Fehlererfassungs-Code (114) und einen Fehlerkorrektur-Code (124) umfasst, wobei die Vielzahl von Code-Blöcken eine geordnete Reihenfolge haben;
Bestimmen (602) einer Vielzahl von Zuverlässigkeits-Metriken (404) unter Verwendung einer Eingabe, die erzeugt wird während einer Verarbeitung der Code-Blöcke, wobei jede der Vielzahl von Zuverlässigkeits-Metriken (404) jedem der Vielzahl von Code-Blöcken (412) entspricht;
Neuordnen (604) der Vielzahl von Code-Blöcken (412) in einer Reihenfolge basierend auf der Vielzahl von Zuverlässigkeits-Metriken (404) und einem Auswahlkriterium davon;
Decodieren (606) der Vielzahl von Code-Blöcken (412) unter Verwendung des Fehlerkorrektur-Codes (422) in der neugeordneten Reihenfolge; und
Verifizieren (608) jedes der decodierten Code-Blöcke unter Verwendung des Fehlererfassungs-Codes (422).

12. Verfahren gemäß Anspruch 11, das weiter aufweist:
Beenden (610) eines Decodierens von verbleibenden Code-Blöcken des Transport-Blocks, wenn ein Fehler in einem decodierten Code-Block erfasst wird.

13. Verfahren gemäß einem der Ansprüche 11 bis 12, wobei der Fehlerkorrektur-Code ein Vorwärts-Fehlerkorrektur-Code ist.

14. Verfahren gemäß einem der Ansprüche 11 bis 13, wobei der Fehlererfassungs-Code aus der Gruppe ausgewählt ist, die besteht aus Paritäts-Schema, Prüfsumme, CRC-Prüfung, Hash-Funktion und eine Kombination daraus.

15. Computerspeichermedium, das durch einen Computer lesbar ist zum Codieren eines Computerprogramms zur Ausführung durch den Computer, um ein Verfahren eines Empfangens eines Transport-Blocks von Daten auszuführen, wobei das Verfahren aufweist:
Empfangen (601) eines Transport-Blocks (102), wobei der Transport-Block eine Vielzahl von Code-Blöcken (104) aufweist, wobei jeder der Vielzahl von Code-Blöcken einen Fehlererfassungs-Code (114) und einen Fehlerkorrektur-Code (124) umfasst, wobei die Vielzahl von Code-Blöcken eine geordnete Reihenfolge haben;
Bestimmen (602) einer Vielzahl von Zuverlässigkeits-Metriken (404) unter Verwendung einer Eingabe, die erzeugt wird während einer Verarbeitung der Code-Blöcke, wobei jede der Vielzahl von Zuverlässigkeits-Metriken (404) jedem der Vielzahl von Code-Blöcken (412) entspricht;
Neuordnen (604) der Vielzahl von Code-Blöcken (412) in einer Reihenfolge basierend auf der Vielzahl von Zuverlässigkeits-Metriken (404) und einem Auswahlkriterium davon;
Decodieren (606) der Vielzahl von Code-Blöcken (412) unter Verwendung des Fehlerkorrektur-Codes (422) in der neugeordneten Reihenfolge; und
Verifizieren (608) jedes der decodierten Code-Blöcke unter Verwendung des Fehlererfassungs-Codes (422).

## Revendications

1. Récepteur (250) pour un système de communication (200), le récepteur (250) comprenant :
un module de réception (252) recevant un bloc de transport (102), le bloc de transport comprenant une pluralité de blocs de code (104), chacun des blocs dans la pluralité de blocs de code incluant un code de détection d'erreur (114) et un code de correction d'erreur (124), la pluralité de blocs de code formant une séquence ordonnée ;
un premier circuit (524) déterminant une pluralité de données métriques de fiabilité (404) à l'aide d'une entrée produite pendant le traitement des blocs de code, chacune des données métriques dans la pluralité de données métriques de fiabilité (404) correspondant à chacun des blocs dans la pluralité de blocs de code (412) ;
un moyen de reclassement des blocs de code (526) reclassant la pluralité de blocs de code (412) dans un ordre fondé sur la pluralité de données métriques de fiabilité (404) et sur un critère de sélection de ceux-ci ;
un décodeur (528) décodant la pluralité de blocs de code (412) à l'aide du code de correction d'erreur (422) dans la séquence reclassée ; et
un vérificateur (530) vérifiant chacun des blocs de code (412) décodés, à l'aide du code de détection d'erreur (422).

2. Récepteur (250) selon la revendication 1, dans lequel le décodage des blocs de code restants au niveau du décodeur est interrompu lorsqu'une erreur est détectée dans un bloc de code décodé.

3. Récepteur (250) selon l'une quelconque des revendications 1 et 2, dans lequel le code de correction d'erreur (422) est un code de correction d'erreur direct.

4. Récepteur (250) selon l'une quelconque des revendications 1 à 3, dans lequel le code de détection d'erreur (422) est sélectionné dans le groupe composé de mécanisme de parité, total de contrôle, contrôle de redondance cyclique, fonction de hachage et combinaison de ceux-ci.

5. Récepteur (250) selon l'une quelconque des revendications 1 à 4, dans lequel l'entrée destinée à la production de la pluralité de données métriques de fiabilité provient d'un démappeur de modulation (504), d'un normalisateur de rapport de log-probabilité (506) ou d'un combinateur de demande de répétition automatique hybride (508).

6. Récepteur (250) selon l'une quelconque des revendications 1 à 5, dans lequel le système de communication (200) est un système de transmission sans fil et le bloc de transport (102) est reçu dans une sous-trame sans fil par transmission sans fil.

7. Récepteur (250) selon l'une quelconque des revendications 1 à 6, dans lequel le code de correction d'erreur est un code de bloc ou un code convolutif.

8. Récepteur (250) selon l'une quelconque des revendications 1 à 7, dans lequel le code de correction d'erreur est sélectionné dans un groupe composé de code de Reed-Solomon, code de Golay, code de Bose-Chaudhuri-Hochquenghem, code de Hamming, code convolutif, code de contrôle de parité à faible densité et turbocode.

9. Récepteur (250) selon l'une quelconque des revendications 1 à 8, dans lequel le moyen de reclassement des blocs de code (526) reclasse un sous-ensemble des blocs de code.

10. Récepteur (250) selon l'une quelconque des revendications 1 à 9, comprenant en outre de multiples unités de décodage parallèle destinées à traiter en parallèle de multiples blocs de code.

11. Procédé de réception d'un bloc de transport (102) de données, comprenant les étapes consistant à :
recevoir (601) un bloc de transport (102), le bloc de transport comprenant une pluralité de blocs de code (104), chacun des blocs dans la pluralité de blocs de code incluant un code de détection d'erreur (114) et un code de correction d'erreur (124), la pluralité de blocs de code formant une séquence ordonnée ;
déterminer (602) une pluralité de données métriques de fiabilité (404) à l'aide d'une entrée produite pendant le traitement des blocs de code, chacune des données métriques dans la pluralité de données métriques de fiabilité (404) correspondant à chacun des blocs dans la pluralité de blocs de code (412) ;
reclasser (604) la pluralité de blocs de code (412) dans un ordre fondé sur la pluralité de données métriques de fiabilité (404) et sur un critère de sélection de ceux-ci ;
décoder (606) la pluralité de blocs de code (412) à l'aide du code de correction d'erreur (422) dans la séquence reclassée ; et
vérifier (608) chacun des blocs de code (412) décodés, à l'aide du code de détection d'erreur (422).

12. Procédé selon la revendication 11, comprenant en outre l'étape consistant à :
terminer (610) le décodage des blocs restants du bloc de transport lorsqu'une erreur est détectée dans un bloc de code décodé.

13. Procédé selon l'une quelconque des revendications 11 et 12, dans lequel le code de correction d'erreur est un code de correction d'erreur direct.

14. Procédé selon l'une quelconque des revendications 11 à 13, dans lequel le code de détection d'erreur est sélectionné dans le groupe composé de mécanisme de parité, total de contrôle, contrôle de redondance cyclique, fonction de hachage et combinaison de ceux-ci.

15. Support de stockage pour ordinateur, lisible par ordinateur et codant un programme d'ordinateur destiné à être exécuté par l'ordinateur pour mettre en oeuvre un procédé de réception d'un bloc de transport de données, le procédé comprenant les étapes consistant à :
recevoir (601) un bloc de transport (102), le bloc de transport comprenant une pluralité de blocs de code (104), chacun des blocs dans la pluralité de blocs de code incluant un code de détection d'erreur (114) et un code de correction d'erreur (124), la pluralité de blocs de code formant une séquence ordonnée ;
déterminer (602) une pluralité de données métriques de fiabilité (404) à l'aide d'une entrée produite pendant le traitement des blocs de code, chacune des données métriques dans la pluralité de données métriques de fiabilité (404) correspondant à chacun des blocs dans la pluralité de blocs de code (412) ;
reclasser (604) la pluralité de blocs de code (412) dans un ordre fondé sur la pluralité de données métriques de fiabilité (404) et sur un critère de sélection de ceux-ci ;
décoder (606) la pluralité de blocs de code (412) à l'aide du code de correction d'erreur (422) dans la séquence reclassée ; et
vérifier (608) chacun des blocs de code décodés, à l'aide du code de détection d'erreur (422).
